# EUROPEAN PATENT SPECIFICATION

(11) **EP 0 317 996 B1**
(45) Date of publication and mention of the grant of the patent: **15.03.1995**
(21) Application number: 88119580.4
(22) Date of filing: 24.11.1988
(51) Int. Cl.: G06K 15/02

(54) **Printer**
Drucker
Imprimante

(30) Priority: 25.11.1987 JP 295099/87
(43) Date of publication of application: 31.05.1989
(73) Proprietor: Oki Electric Industry Company, Limited, Tokyo 105 (JP)
(72) Inventor: Koike, Kiyotaka, 7-12, Toranomon 1-chome Minato-ku Tokyo (JP)
(74) Representative: Goddar, Heinz J., Dr.

(56) References cited:
- EP-A- 0 173 285
- EP-A- 0 205 767

## Description

The present invention relates to a printer, more paticularly to a method of discriminating of and using of a memory cartridge to be connected to the printer.

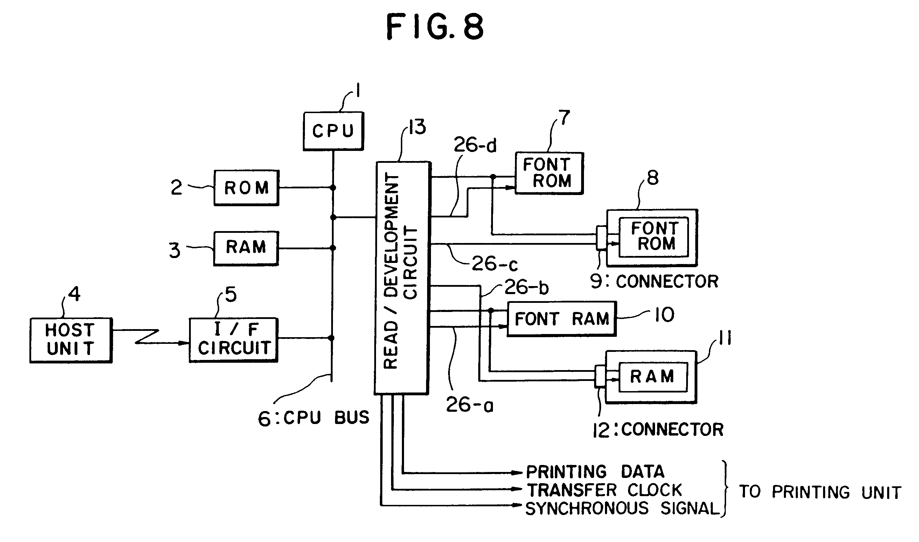

A memory cartridge is described with reference to Figs. 8 through 12.

Referring to Fig. 8, a printer comprises a CPU 1 connected to a CPU bus 6, a programmable ROM 2 connected to the CPU bus 6, a RAM 3 for temporarily storing a received data or other necessary data and connected to the CPU bus 6, an interface (I/F) circuit 5 for receiving a data from a host unit 4 provided outside the printer, a read/development circuit 13 connected to the data bus 6 provided for increasing a throughput and enabling to directly access to a font ROM 7 or a font RAM 10 (respectively described later) without receiving instructions from the CPU 1 for reading and developing with high speed dot image data from the font ROM 7 or the font RAM 10, the font ROM 7 connected to the read/development circuit 13 for storing a resident font data provided by the printer, for example, a Ming type, a font ROM cartridge 8 connected to the read/development circuit 13 through a connector 9 for storing a down-line load font data provided by the host unit 4, for example, Italic type, the font RAM 10 connected to the read/development circuit 13 for storing therein down-line load font data of a character, which is not stored in the font ROM 7 but provided by the host unit 4 and received thereto by the dot image data, a font RAM cartridge 11 connected to the read/development circuit 13 through a connector 12. A printing mechanism and a printing control mechanism usually employed in the printer are omitted here.

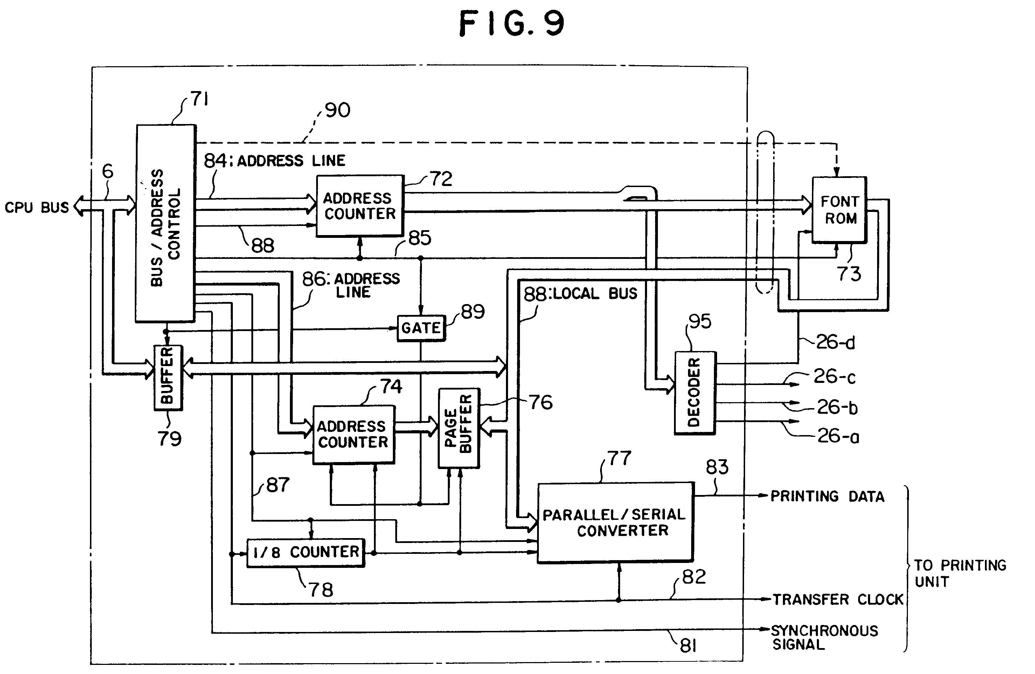

The read/development circuit 13 is described in detail hereafter with reference to Fig. 9.

A bus/address control 71 is provided for accessing a font ROM 73 or a RAM (not shown). An address provided by the bus/address control 71 is supplied by way of a line 84 to an address counter 72 for a font ROM 73 together with a write signal 88 generated by the bus/address control 71, while an address provided by the bus/address control 71 is supplied by way of an address line 86 to an address counter 74 for a page buffer 76. A read/write signal 85 for a font data generated by the bus/address control 71 is supplied to the address counter 72, the font ROM 73 and a gate 89. An output of the gate 89 is supplied to the address counter 74 and the page buffer 76. The gate 89 is normally open. One output of the address counter 72 is supplied to the font ROM 73 and another output of the address counter 72 is supplied to a decoder 95. An output of the decoder 95 is supplied to the font ROM 73 by way of a line 26-d, and an output of the address counter 74 is supplied to the page buffer 76. An output of the font ROM 73 and an output of the page buffer 76 are respectively supplied to a parallel/serial converter 77 by way of a local bus 80. A start signal 87 is generated by the bus/address control 71 when the page buffer 76 starts to read out the data. The start signal 87 is supplied to the address counter 74, a 1/8 counter 78 and the parallel/serial converter 77. A synchronous signal 81 generated by the bus/address control 71 is the signal indicative of a block of line or an end of line for a printing data which is supplied for each block or unit of line. A transfer clock 82 for the printing data generated by the bus/address control 71 is supplied to the parallel/serial converter 77 and the 1/8 counter 78 output of which is supplied to the address counter 74, the page buffer 76, and the parallel/serial converter 77. Here, the 1/8 counter 78 is provided for dividing the input frequency by 8 since the input of the paralle/serial converter 77 (corresponding to the local bus 80) is composed of 8 bits.

A buffer 79 is provided for connecting the local bus 80 and the CPU bus 6, and the CPU bus 6 and the local bus 80 are not normally connected with each other. The buffer 79 and the gate 89 are respectively controlled by the bus/address control 71, and such control operation can be effected when the CPU 1 reads out the data on the local bus 80.

An operation of the read/development circuit 13 will be described with reference to Figs. 9, 10 and 11.

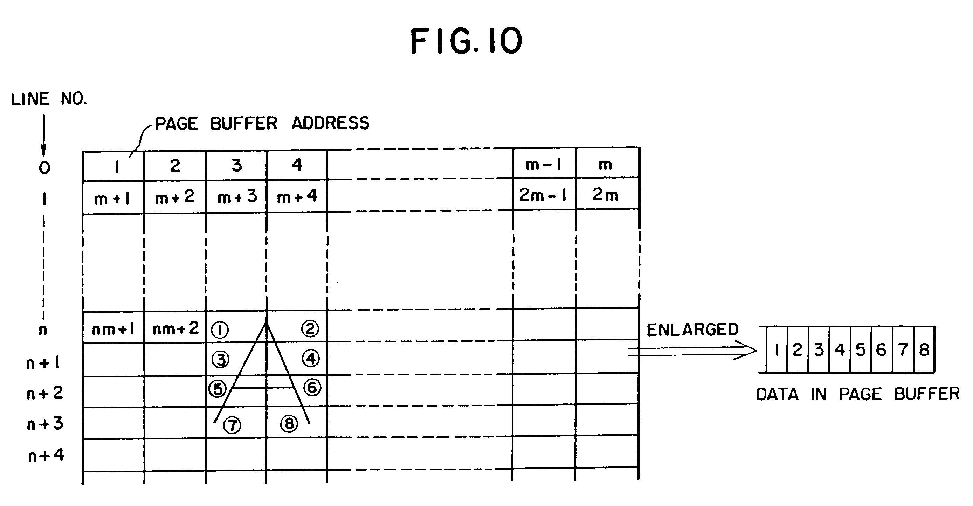

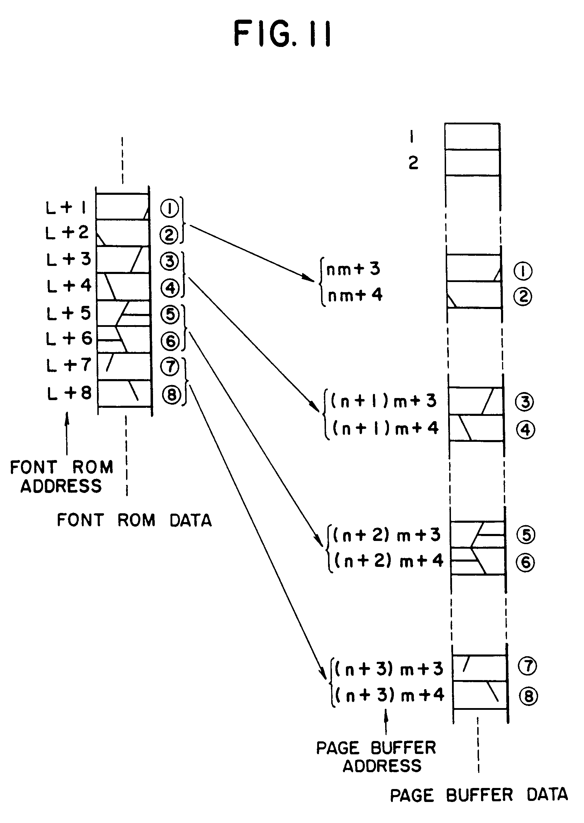

First, the operation to store the data of the font ROM 73 into the area designated by the page buffer 76 will be described. The address of the page buffer 76, as evident from the page buffer data shown in an output mode illustrated in Fig. 10, is assigned to the location at the time of outputting the data, namely, printing the character. For example, a font data of a character "A" assigned to the locations indicated as ① through ⑧ in Fig. 10 is stored in the font ROM 73 as shown in Fig. 11 which explains writing of the data between the font ROM 73 and the page buffer 76.

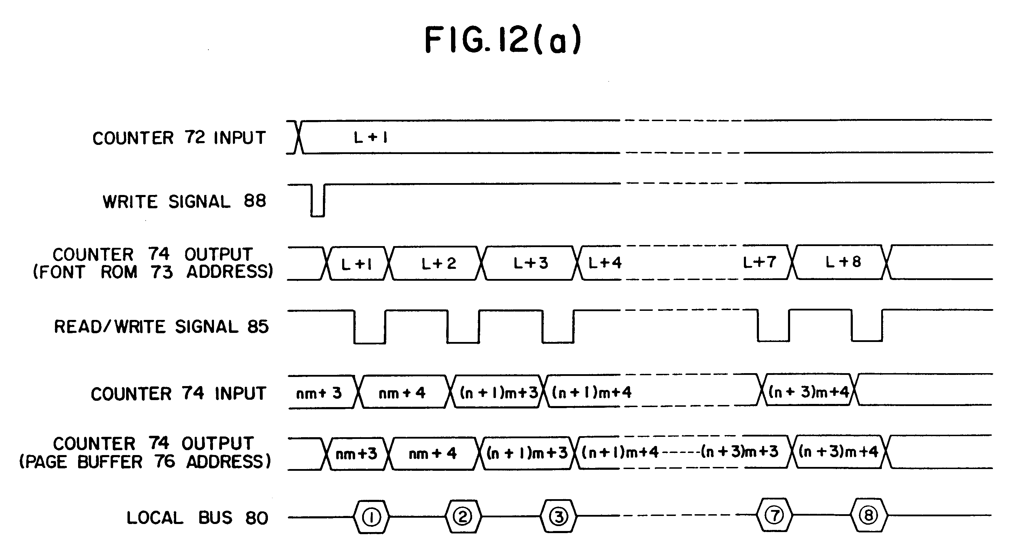

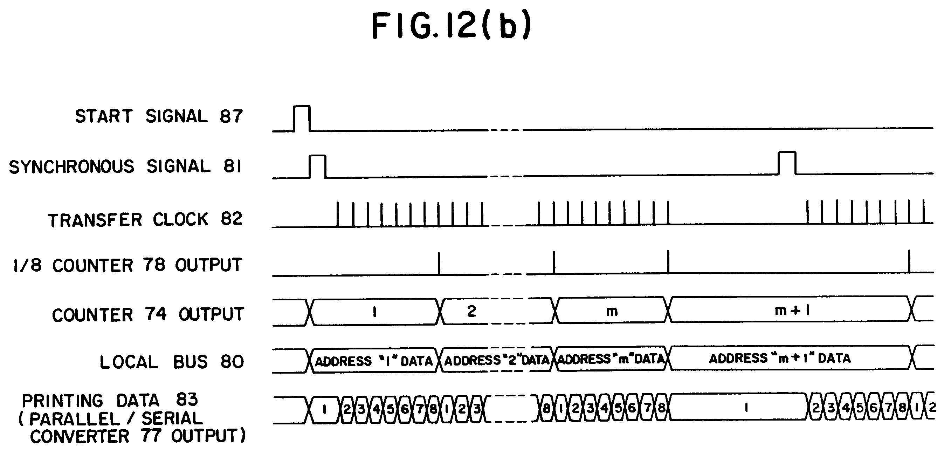

An example of the development operation of the font data of the character "A" as shown in Fig. 10 to the page buffer 76 will be described in accordance with reference to Figs. 12(a), (b).

The operation of writing in the page buffer 76 will be described with reference to Fig. 12(a), in which a first address of the font data "L + 1" and the number of the data "8", a page buffer address "nm + 3", the address widths of a row and a column data "2, 4" are respectively applied to the bus/address control 71 to thereby initiate the bus/address control 71 to execute the read/development operation. The bus/address control 71 sets the addresses respectively in the address counters 72, 74 and issues the read/write signal 85 to write a data ① of the font ROM 73 into the page buffer 76. At this time, the output of the address counter 72 increments by 1 and becomes "L + 2" upon the completion of writing of the data ①. The bus/address control 71 then sets the page buffer address "nm + 4" in the address counter 74, and issues the read/write signal 85 to thereby write a data ② of the font ROM 73 into the page buffer 76. Hereupon, since the width of the data is "2", "(n + 1) m + 3" is set in the address counter 74, and a data ③ of the font ROM 73 is written into the page buffer 76. Likewise, data ④ through ⑧ are sequentially written in the page buffer 76.

An operation of reading out the data (printing data output operation) of the page buffer 76 will be described hereafter with reference to Fig. 12(b). The bus/address control 71 issues a start signal 87 on the basis of an instruction from the CPU 1 to thereby set the address counter 74 and the 1/8 counter 78 to an initial state (the state where the address counter 74 is set to "1", the 1/8 counter 78 is reset, and the data of the address "1" of the page buffer 76 is set in the parallel/serial converter 77). Thereafter, the synchronous signal 81 and the transfer clock 82 are respectively issued by the bus/address control 71 so that the printing data is successively outputted by the transfer clock 82. When the data for eight clocks is issued, the output of the address counter 74 increments by 1 on the basis of the output of the 1/8 counter 78. Likewise, a data of the address."2¨ of the page buffer 76 is set in the paralle/serial converter 77 and is successively output as the printing data by the transfer clock 82.

Similarly, with the sequential operation, the data up to a data of the address "m" will be successively output. Here, a value of the address "m" is the one inherent to be determined by the capability of printing to be made by the printer.

After the printing data for one line is completed with a series of operations as set forth above, and the bus/address control 71 issues the synchronous signal showing the first of the next line of data. With the sequential operation same as set forth above, the printing data for one page is output. Frequencies of a read/development clock and the transfer clock can be set to several hundred nano seconds (being set to several micro seconds through several ten micro seconds when the CPU 1 directly controls the clocks), whereby such arrangement is an effective means for a dot line printer requiring for outputting the printing data with high speed.

An operation to read out the data of the font ROM 73 by the CPU 1 is described herewith. After the buffer 79 is open, and the gate 89 is closed, the CPU 1 issues the address of the font ROM 73 to the bus/address control 71 to execute the read operation, whereby the data of the font ROM 73 is output on the local bus 80 through the buffer 79, on the CPU bus 6 to the CPU 1 so that the data of the font ROM 73 can be read out by the CPU 1.

An operation of the read/development circuit 13 for reading and developing the data of the font RAM is same as that of the font ROM 73 as set forth above. In this case, the font RAM is substituted for the font ROM 73 and a write signal 90 issued by the bus/address control 71 to the font RAM is added in the arrangement of the read/development circuit 13 for the font ROM 73 in Fig. 9.

An operation of writing the data by the CPU 1 into the font RAM is reversed to the read operation out of the font ROM 73 by the CPU 1, in which the data on the CPU bus 6 is transfered on the local bus 80 through the buffer 79, and the write signal 90 is issued by the bus/address control 71 to the font RAM.

An operation of the printer incorporating the memory cartridge therein will be described hereafter with reference to Fig. 8.

A data from the host unit 4 is received by the I/F circuit 5 and the content of the data is analyzed by the CPU 1 which data is stored in the RAM 3. When the printing operation is initiated, the CPU 1 instructs the read/development circuit 13 to execute the operation for developing and printing the data on the basis of the data stored in the RAM 3. The read/development circuit 13 instructed by the CPU 1 to develop and output the content of the data can access the font ROM or the font RAM without receiving the instruction from the CPU 1 and outputs the printing data with high speed.

Inasmuch as an operator is previously aware of the content of the data, namely, a font type necessary for printing, to be supplied to the printer from the host unit 4, the font ROM cartridge or the font RAM cartridge can be connected to the read/development circuit 13 when required.

However, with the arrangement of the printer, there arises problems that one connector for the ROM cartridge and another connector for the RAM cartridge are employed since more the connector for the ROM cartridge or the RAM cartridge is employed, more the cost thereof is incurred for a low cost printer. Under the circumstances, if a user wishes to use one of a plurality of RAM cartridges or ROM cartridges, for example, if he wishes to print font types at a time extended over a plurality of font ROM cartridges, of wishes to print an original font which is not covered in a plurality of font RAM cartridges, the arrangement of the printer can not meet such needs.

EP-A 0 173 285 relates to a printer to which a cartridge having incorporated therein different memories (ROM and RAM), i.e. a single type of cartridge may be connected. Such a cartridge has a memory map of 8 pages among which pages 1 and 2 are RAMs and pages 3 to 8a ROMs. Pages 1 and 2 comprise an xx byte RAM, and pages 3 to 8 comprise a font ROM having a xx font. The cartridge does not include this information of the memory map therein. The memory map information has to be stored in advance in a program ROM in the printer.

In this way, it is possible to add a desired capacity of RAM and a desired font ROM to the printer on the basis of the memory map information which has been previously stored in this program ROM by connecting the cartridge having the above construction. The page address information of RAMs is stored in case of accessing RAM, while the page address information of eather of ROMs Is stored in case of accessing ROM, in the page address.

In such a printer, however, when a cartridge having a different memory map, e.g. pages 1 to 4 are ROMs and pages 5 to 8a RAMs, is connected thereto, a normal operation cannot be expected using the memory map information stored in the ROM. That is, if a data is to be written in page 1 (supposing that page 1 is RAM), the data cannot be stored therein because it is actualy a ROM. Accordingly, a down-line load character pattern is lost without being stored in the cartridge. Also, if a reading is performed in page 8 supposing that it is a font ROM, nothing is stored therein because it is actualy a RAM, there by deciding that the ROM is not present which leads to the waste of the 8 pages of RAMs.

The present invention has been made to solve the problems of the printer and provide a printer enabling to print simultaneously font types of characters extending over a plurality of memory cartridges or a variety of down line font data with low cost.

The printer of the present invention including a plurality of font memory cartridges provided with font memories of different type, the font memories storing therein down line load font data of characters which are not resident in the font memories incorporated in the printer but provided by a host unit outside the printer, at least one connector being connected to anyone of a plurality of font memory cartridges for outputting the down line load font data, the printer further including a first means for forcibly reading out the font data of the characters stored in the font memory mounted on the font memory cartridge connected to one of the connectors, and a second means for discriminating kinds of the font memory mounted on the font memory cartridge connected to one of the connectors and a content of the font data of the characters stored in the font memory mounted on the font memory cartridge on the basis of the font data of characters read out from the first means.

The above and other objects, features and advantages of the present invention will become more apparent from the following description taken in conjunction with the accompanying drawings.
Fig. 1 is a block diagram of an arrangement of a printer according to an embodiment of the present invention.
Fig. 2 is a view of assistance in explaining signal lines of one of the connectors in Fig. 1;
Fig. 3 is a block diagram of an arrangement of a font ROM cartridge in Fig. 1;
Fig. 4 is a block diagram of an arrangement of a font RAM cartridge in Fig. 1;
Figs. 5 (a), (b) are views respectively illustrating address maps of read data;
Fig. 6 is a view of assistance in explaining function of an information issuing circuit;
Fig. 7 is a view illustrating address maps of a read/developing circuit in Fig. 1;
Fig. 8 is a block diagram of an arrangement of a printer;
Fig. 9 is a circuit block diagram of a read/development circuit in Fig. 8;
Fig. 10 is a view of assistance in explaining a content of a page buffer represented as output mode in Fig. 8;
Fig. 11 is a view of assistance in explaining a mode of writing data between a font ROM and the page buffer in Fig. 8;
Figs. 12 (a), (b) are respectively timing chart of assistance in explaining operation of the read/development circuit in Fig. 8;
Fig. 13 is a functional block diagram of assistance in explaining a function of the cartridge information read/discrimination means;
Fig. 14 is a flow chart of assistance in explaining a schematic operation of the cartridge read/discrimination means in Fig. 13;
Fig. 15 is a flow chart of assistance in explaining a subroutine process for discrimination of a font type;
Fig. 16 is a flow chart of assistance in explaining a schematic operation in the subroutine process in Fig. 15;
Fig. 17 is a view of assistance in explaining a content of a table TB storing a font type;
Fig. 18 is a view of assistance in explaining a content of a table TB storing a cartridge type; and
Fig. 19 is a view of assistance in explaining a final content of registers 2-a through 2-d and registers 3-a through 3-d which store the result of the cartridge information discrimination after completion of the discrimination thereof.

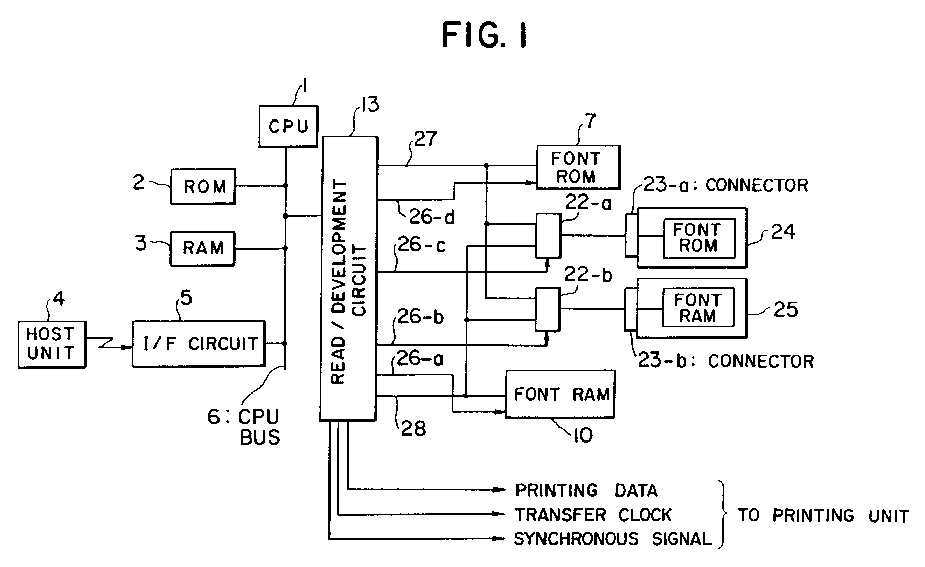

An embodiment of the present invention will be described hereafter with reference to Figs. 1 through 7 in which elements as denoted in the same numerals as those in the printer as set forth above are omitted in the explanation thereof.

An embodiment of the printer of the present invention includes a font ROM cartridge 24 and a font RAM cartridge 25.

A font ROM 7 incorporated in the printer is connected to a read/development circuit 13 connected to a bus line 6 by way of a select line 26-d and a line 27. A font RAM 10 incorporated in the printer is connected to the read/development circuit 13 by way of a select line 26-a and a line 28. Two gate circuits 22-a, 22-b are connected to the read/development circuit 13 by way of the lines 27, 28 and select lines 26-b, 26-c. The gate circuit 22-a is further connected to a connector 23-a for the font ROM 24 and the gate circuit 22-b is further connected to a connector 23-b for the font RAM 25.

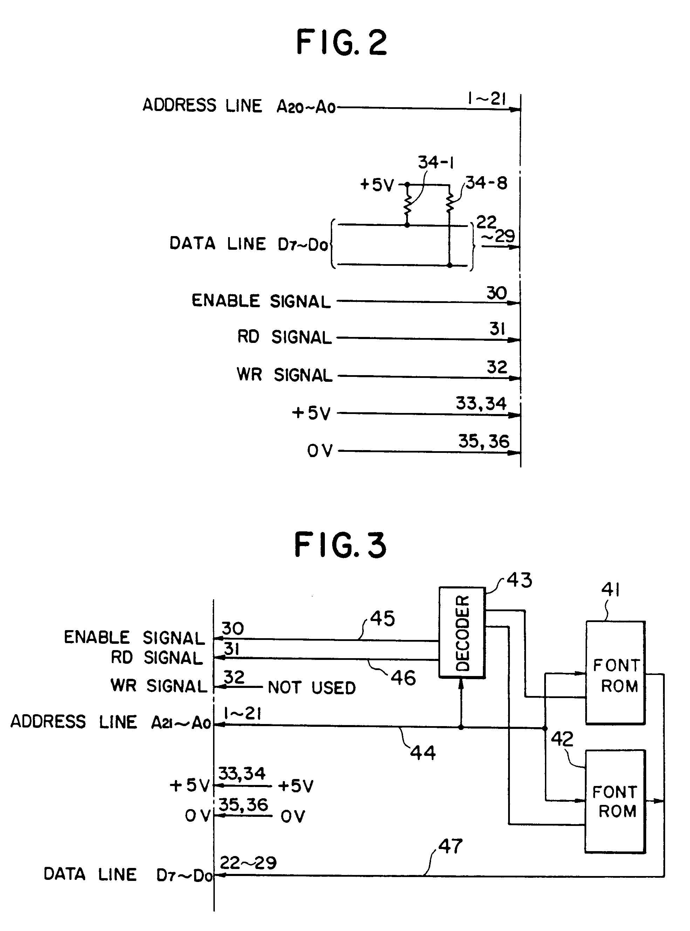

An arrangement of signal lines in the connector 23-a as shown in Fig. 1 will be described in detail with reference to Fig. 2.

The signal lines in the connector 23-a comprise address lines A20 through A-0 connected to pins 1 through 21, a read (RD) signal connected to a pin 31, a write (WR) signal connected to a pin 32, an enable signal connected to a pin 30, and data lines D7 through D0 connected to pins 22 through 29. The data lines D7 through D0 are leveled up to a "1" level by eight resistors (34-1 through 34-8). A power supply (+5V) for the ROM cartridge 24 is connected to pins 33, 34 and a ground (0V) is connected to pins 35, 36. The arrangement of the signal lines in the connector 22-b is same as that of the connector 23-a.

An arrangement of the ROM cartridge 24 as shown in Fig. 1 will be described with reference to Fig. 3.

The font ROM 24 comprises a font ROM 41 and a font ROM 42 respectively connected to some of address lines A21 through A0 by way of a line 44 (varies depending on a font ROM size to be used, for example, the address lines will be seventeen, namely, A16 through A0 when it is 128K x 8 bits), and a decoder 43 connected to the address line, e.g., A17 which is located higher the address lines set forth just above namely A16 through A0. The decoder 43 is connected to an enable signal 30 by way of a line 45 and a read (RD) signal 31 by way of a line 46, and an output of the decoder 43 is connected to the font ROMs 41, and 42. The output of the font ROMs 41 and 42 are respectively connected to data lines D7 through D0 by way of a line 47. In the arrangement of the font ROM cartridge 24, the write (WR) signal is not used.

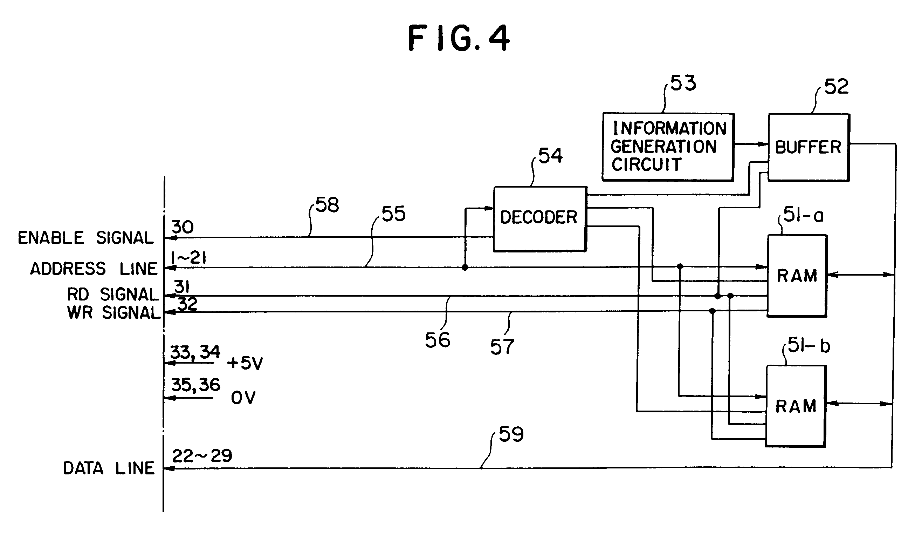

An arrangement of the font RAM cartridge 25 as shown in Fig. 1 will be described with reference to Fig. 4.

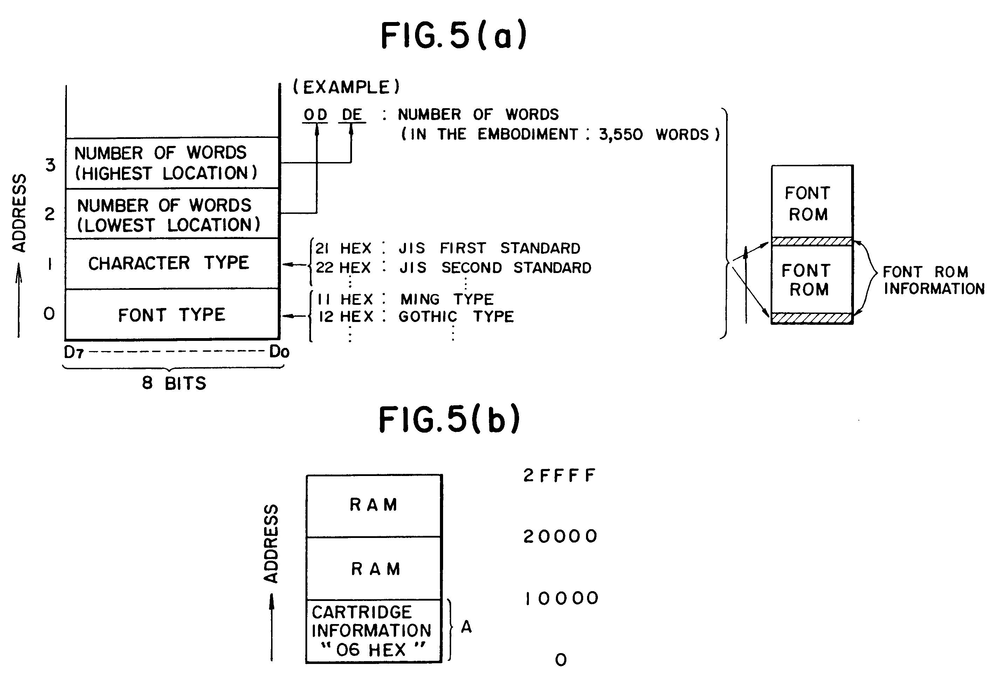

The RAM cartridge 25 comprises RAMs 51-a, 51-b connected to addresses A21 through A0 by way of a line 55, (varies depending on a size of RAM to be used, for example, the fifteen addresses A14 through A0 are used if it is 32K x 8 bits), and a decoder 54 connected to an enable signal 30 by way of a line 58 and also to the address located higher the fifteen addresses just mentioned above. An output of the decoder 54 is connected to the RAMs 51-a, 51-b, and a buffer 52. Addresses assigned to the RAMs 51-a, 51-b, and a buffer 52 are located as shown in Fig. 5(b), namely, in the manner that the buffer 52 is located at the lowest position. The buffer 52 connected respectively to a read (RD) signal 31 by way of a line 56, and outputs of the RAMs 51-a, 51-b. The RAM cartridge 25 further comprises an information generation circuit 53 provided for generating one of the codes arbitrarily selected from "01HEX" through "FEHEX" for use in the font RAM cartridge. Only when the buffer 52 is selected by the decoder 54, a content of the information generation circuit 53 ("06HEX" in Fig. 5(b)) is outputted to data D7 through D0 by way of a line 59. The data lines D7 through D0 is connected to the input and output terminals of the RAM 51-a, and the RAM 51-b.

An operation of the printer of an embodiment according to present invention will be described in detail hereafter.

First, the operation of the connector 23-a will be described with reference to Fig. 1.

The read/development circuit 13 forcibly generates addresses successively from the address located at the lowest in an address area asigned to the connector 23-a on the basis of the read instruction from the lowest address of the cartridge area issued by the CPU 1, so that the read data corresponding to the address is delivered to the CPU 1. Assuming that the font ROM 24 as shown in Fig. 1 is connected to the connector 23-a, the font ROM information as shown in Fig. 5(a) is delivered as the read data.

Hereupon, the font ROM information means the font type, for example, a Ming (11HEX), a chinese character of JIS first standard (21HEX), or the number of characters (0DDEHEX), etc. which are all coded on the basis of the rule of the printer according to the present invention and composed of at least two codes. Accordingly, the CPU 1 can discriminate that the cartridge connected to the connector is the font ROM cartridge on the basis of the data and a content of the font. Assuming that the font RAM cartridge is connected to the connector, a cartridge information "06HEX" in "A" portion in Fig. 5(b) is successively read out as the read data so that the CPU 1 can discriminate that it is the font RAM cartridge on the basis of the data "06HEX".

Furthermore, if the cartridge information has a capacity of the RAM, the capacity of the RAM can be also discriminated by the CPU 1, for instance, it is "06HEX : 384 K Byte RAM cartridge". In case where the font ROM or the font RAM cartridge is not connected to the connector, since the data lines D7 through D0 are leveled up to the "1" level by the resistors 34-1 through 34-8 as shown in Fig. 2, the read data as "FFHEX" is successively read out so that the CPU 1 can discriminate that the font ROM or font RAM cartridge is not connected to the connector. This operation is also, applicable to the connector 23-b.

Accordingly, the CPU 1 can process the data received from the host unit 4 on the basis of the arrangement of the memory discriminated by the read operation mentioned above.

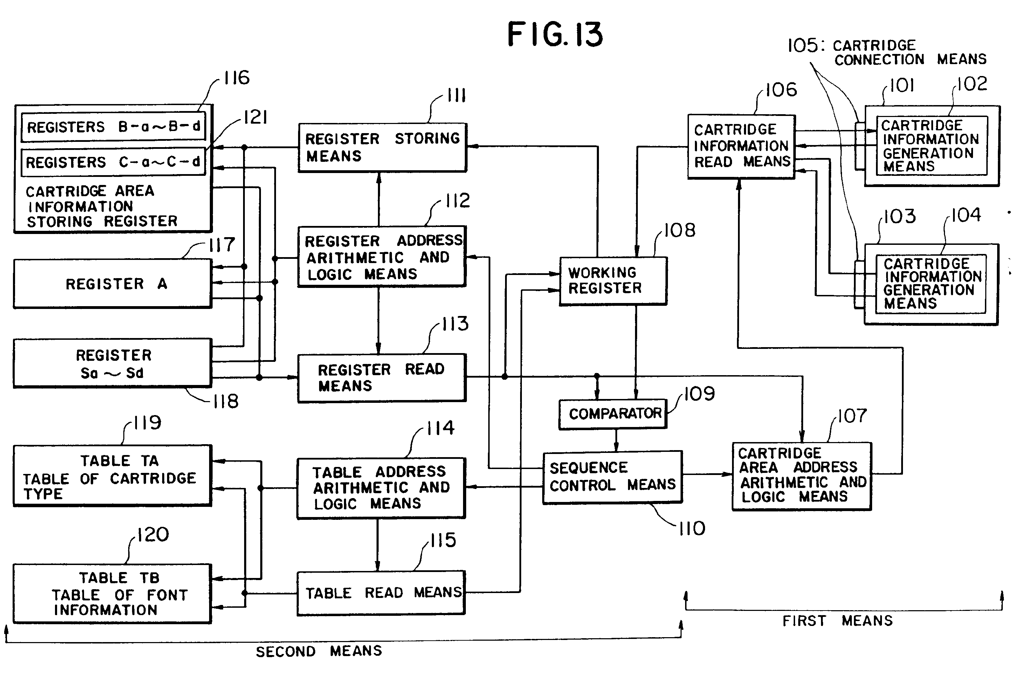

A read/decision means of the cartridge information according to the present invention will be described with reference to Fig. 13.

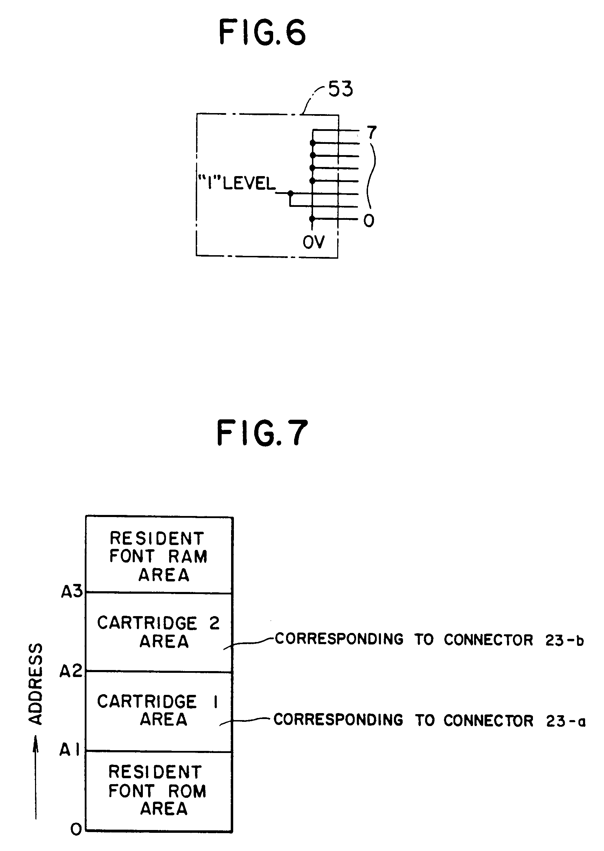

A font ROM cartridges 101 and 103 respectively have cartridge information generation means 102, 104 (refer to Figs. 5 and 6). The cartridge information generation means 102 and 104 respectively connected to a cartridge information read means 106 through respectively cartridge connection means 105 (connectors). The cartridge information read means 106 reads out a cartridge information from the cartridge information generation means 102, 104 on the basis of an instruction of a cartridge area address arithmetic and logic means 107 and the cartridge information just read out is stored in a working register 108. The working register 108 is an area to store temporarily the data.

A register address arithmetic and logic means 112 generates addresses when a register storing means 111 stores data into a register A 117, registers B-a through B-d 116, registers C-a through C-d 121, and registers Sa through Sd 118, and a register read means 113 reads out the data of the register A 117, the registers B-a through B-d 116, the registers C-a through C-d 121, and the registers Sa through Sd 118.

A table address arithmetic and logic means 114 generates addresses when a table read means 115 reads out data of a table TA 119 and a table TB 120.

A comparator 109 compares the data in the working register 108 with an output data from the register read means 113 and decides that both data are same or not. A result of decision is outputted to a sequence control means 110. The sequence control means controls sequential processes of read/decision of the cartridge information and controls to operate, when required, the cartridge area address arithmetic and logic means 112 and the table address arithmetic and logic means 114.

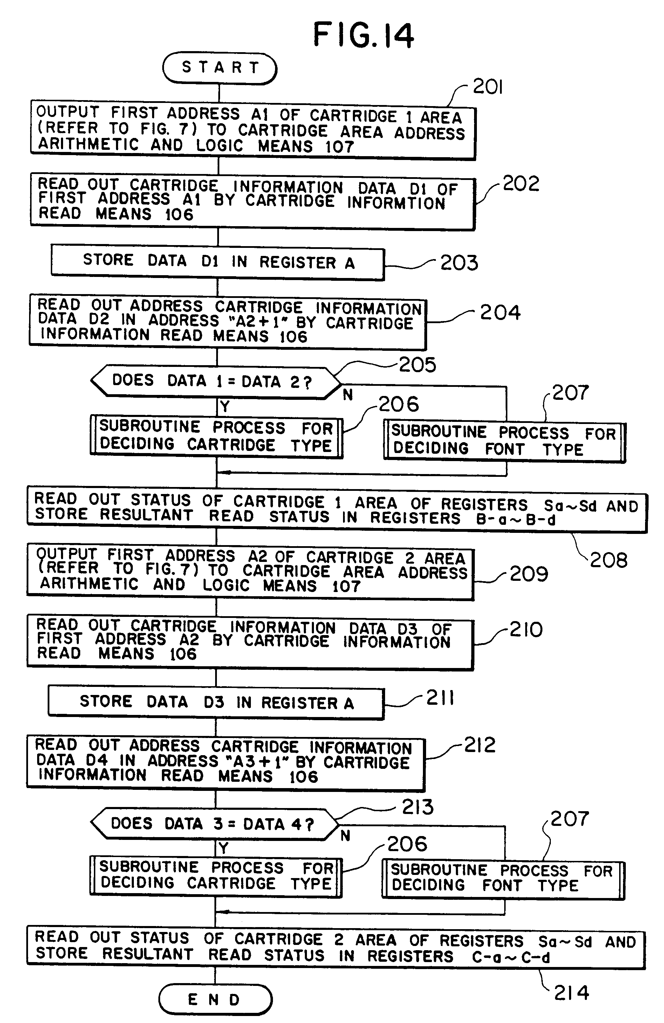

The cartridge read/decision operation processes will be described hereafter with reference to Figs. 14 through 16.

In this embodiment, let us assume that the font ROM cartridge (Ming type, JIS first standard character, 3,550 words: cartridge type data 11HEX, 21HEX, 0DHEX, DEHEX) is connected to the cartridge 1 area, and the 384 K Byte RAM cartridge (cartridge type data 06HEX) is connected to the cartridge 2 area.

At first, in step 201, a first address A1 of the cartridge 1 area (refer to Fig. 7) is outputted to the cartridge area address arithmetic and logic means 107, then in step 202, the cartridge information data D1 of the first address A1 is read out by the cartridge information read means 106. Here, 11HEX as the data D1 is read out. In step 203, the data D1 is stored in the register A so that the data D1 is used to be compared with a next data to be read out. In step 204, an address cartridge information data D2 (21HEX) in the address following the first address of the cartridge 1 area which has been accessed in the steps 201, 202 is read out. In step 205, the read/decision means compares the address cartridge information data D2 with the cartridge information data D1 and decides as to whether both data D2 and D1 are same or not. According to the embodiment, since D1 =11HEX and D2 = 21HEX, both data are not same. Then, a subroutine process for deciding the font type is executed in step 207.

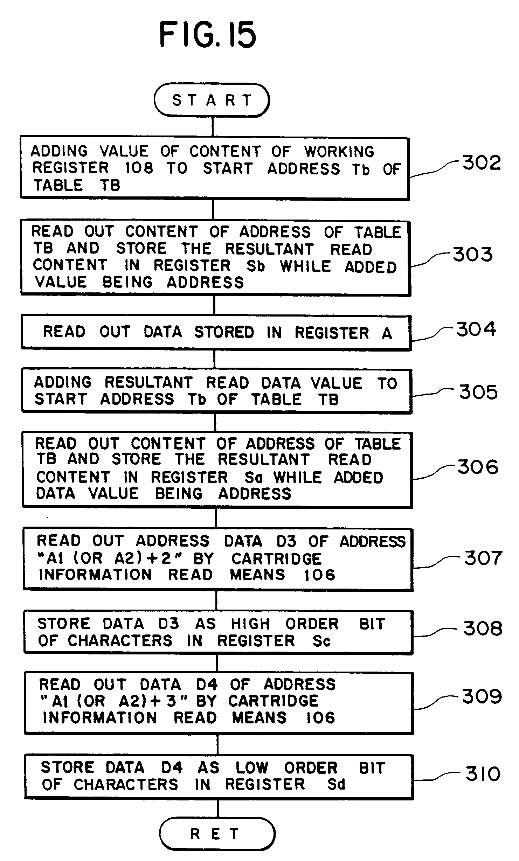

The subroutine process will be explained with reference to Fig. 15.

First, in step 302, an arithmetic operation for an address of the table TB is executed by the table address arithmetic and logic means 114. The address of the table TB becomes "Tb + 21HEX" since 21HEX is addressed already in the working register 108. In step 303, the content of the address of the table TB, "Tb 21HEX", namely "JIS first standard" as the font type is read out by the table read means 115. The resultant read font type, namely, "JIS first standard" is stored in the register Sb by the register address arithmetic and logic means 112 and the register storing means 111. Next, in step 304, the data stored in the register A 117, namely, "11HEX" in step of 203 is read out by the register address arithmetic and logic means 112 and the register read means 113, then the content of the address of the table TB 120, "Tb + 11HEX", namely, "Ming type" is read out in steps of 305 and 306 in the same manner as steps of 302 and 303. The resultant read content, namely, "Ming type" is stored in the register Sa. Then, in step 307, the cartridge information of the next address (0DHEX) following the address of the cartridge 1 area accessed in step of 204 is read out, and the content thereof is stored in the register Sc in step 308. Likewise, the cartridge information of the next address (DEHEX) is stored in the register Sd in steps 309 and 310. The execution of the subroutine process will be completed in the steps described above. A next step is returned to the step 208 in the processes as shown in Fig. 14.

In step 208, the content of the registers Sa through Sd stored in step 207 of the subroutine process is transferred to the registers Ba through Bd on the ground that the registers Sa through Sd are common registers used in each subroutine process. The cartridge 1 area is thus decided.

The decision operation for the next cartridge 2 area will be described.

The cartridge information data D3 and D4 of the cartridge 2 are read out in steps 209 through 212 in the same manner as steps 201 through 205. The resultant read data D3 and D4 are decided in step 213 as to whether both data D3 and D4 are same or not. Since in this example, data D3 = 06HEX and the data D4 = 06HEX, both data are the same.

Then, a subroutine process for decision of the font type is executed in step 207.

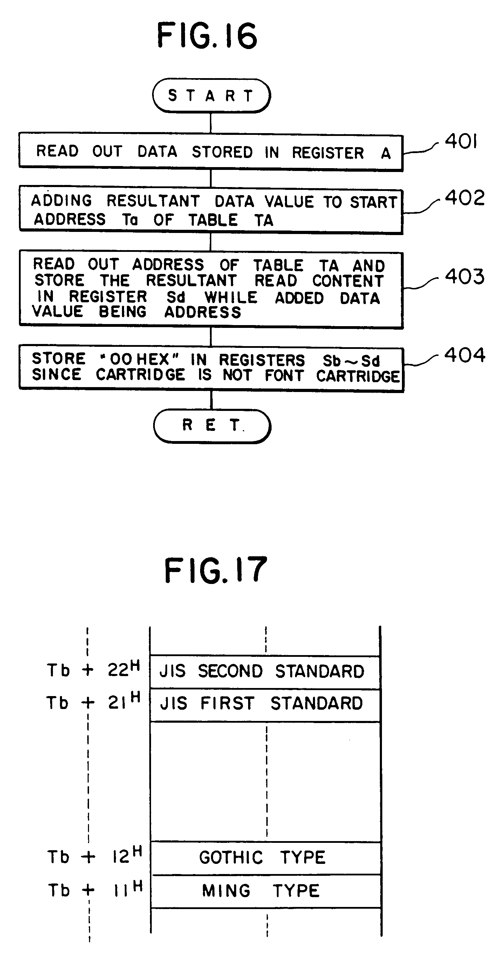

The subroutine process will be explained with reference to Fig. 16.

First, the data (06HEX) stored in step 211 is read out by step 401, and subjected to the operations by steps 402 and 403 in the same manner as steps of 305 and 306. Then, the cartridge font type data "384 K Byte RAM cartridge" is read out of the table Ta which is stored in the register Sa.

Next, the data "00HEX" is stored in the registers Sb through Sd by step 404. This storage operation is made as a complemental process for keeping the content of the registers Sb through Sd unstable although only the data of the register Sa is enough to be stored since the RAM cartridge information is composed of a capacity thereof.

Upon the completion of the decision of the cartridge 2 area, the step is returned to step 214 in Fig. 14.

In step 214, the contents of the registers Sa through Sd are transferred to the registers C-a through C-d in the same manner of step 208.

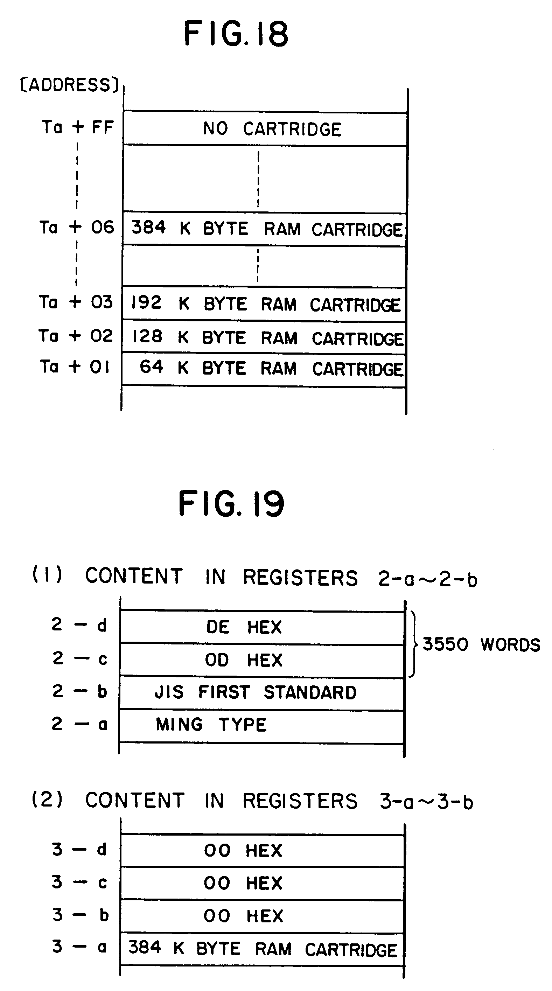

The decision operation for the cartridge 1 area, and the cartridge 2 area is completed by executing the steps as shown in Figs. 14 through 16. A final content of the result of the decision is stored in both the registers 2-a through 2-d and the registers 3-a through 3-d as illustrated in Fig. 19.

Provided that the 384 K Byte RAM cartridge is connected to the cartridge 1 area and the font ROM cartridge is connected to the cartridge 2 area, the contents of the registers 2-a through 2-d are only substituted by the contents of the registers 3-a through 3-d upon execution of a series of processes set forth above.

The preferred embodiment has been described when a static RAM is employed in the RAM cartridge but the same effect can be achieved with ease by employment of a dynamic RAM.

According to the present invention, a connector for a plurality of cartridge memories can be arbitrarily connected to a font ROM cartridge or a font RAM cartridge so that it becomes possible to provide a printer enabling to print simultaneously font types of characters extending over a plurality of memory cartridges or a variety of down-line load font data with low cost. Furthermore, the shapes of the cartridges can be uniform so that cases and connectors can be obtained by a mass production.

Still furthermore, the present invention is not limited to a high speed printer having read/development circuit set forth above but can be employed by a low speed printer having no read/development circuit but elements controlled by the CPU. The present invention is also applicable to various printers employing any kind of printing method such as wire dot printer, a thermal printer, an inject-type printer, a facsimile printer, an electrostatic printer, etc.

## Claims

1. A printer including a plurality of font memory cartridges (24, 25), provided with font memories of different type (42, 42; 51-a, 51-b), the font memories (41, 42; 51-a, 51-b) storing therein down line load font data of characters which are not resident in the font memories (7, 10) incorporated in the printer but provided by a host unit (4) outside the printer, at least one connector (23-a, 23-b) being connected to anyone of the plurality of font memory cartridges (24, 25) for outputting the down line load font data, said printer further including:
(a) a first means for forcibly reading out the font data of the characters stored in the font memory (41, 42, 51-a, or 51-b) mounted on the font memory cartridge (24 or 25) connected to one of the connectors (23-a, 23-b); and
(b) a second means for discriminating kinds of the font memory mounted on the font memory cartridge (24 or 25) connected to one of the connectors (23-a, 23-b) and a content of the font data of the characters stored in the font memory (41, 42, 51-a or 51-b) mounted on the font memory cartridge (24 or 25) on the basis of the font data of characteres read out from the first means.

2. A printer according to Claim 1, characterized in that the memory cartridges (24, 25) are a font ROM cartridge (24) having the font ROM information and a font RAM cartridge (25) having the font RAM cartridge information, each information comprises at least font type, characters, number of characters which are coded on the basis of a predetermined rule.

## Patentansprüche

1. Drucker, einschließlich einer Vielzahl von Schrifttyp-Speicherkassetten (24, 25), die mit Schrifttypspeichern unterschiedlichen Typs (41, 42; 51-a, 51-b) versehen sind, wobei die Schrifttypspeicher (41, 42; 51-a, 51-b) programmgeladene Schrifttypdaten von Zeichen, welche in den Schrifttypspeichern (7, 10), die in dem Drucker eingebaut sind, nicht vorliegen, sondern von einer Wirtseinheit (4) außerhalb des Druckers geliefert werden, speichern, wobei wenigstens ein Verbinder (23-a, 23-b) mit irgendeiner der Vielzahl von Schrifttyp-Speicherkassetten (24, 25) zum Ausgeben der programmgeladenen Schrifttypdaten verbunden ist, wobei der Drucker weiter umfaßt:
(a) eine erste Einrichtung zum erzwungenden Auslesen der Schrifttypdaten der in dem Schrifttypspeicher (41, 42, 51-a oder 51-b) gespeicherten Zeichen, der auf der Schrifttyp-Speicherkassette (24 oder 25) angebracht ist, die mit einem der Verbinder (23-a, 23-b) verbunden ist; und
(b) eine zweite Einrichtung zum Unterscheiden der Arten der Schrifttypspeicher, die auf der Schrifttyp-Speicherkassette (24 oder 25) angebracht sind, welche mit einem der Verbinder (23-a, 23-b) verbunden ist, und eines Inhaltes der Schrifttypdaten der Zeichen, die in dem Schrifttypspeicher (41, 42, 51-a oder 51-b), der auf der Schrifttyp-Speicherkassette (24 oder 25) angebracht ist, gespeichert sind, auf der Basis der Schrifttypdaten der Zeichen, die von der ersten Einrichtung ausgelesen worden sind.

2. Drucker nach Anspruch 1, dadurch gekennzeichnet, daß die Speicherkassetten (24, 25) eine Schrifttyp-ROM-Kassette (24) mit der Schrifttyp-ROM-Information und eine Schrifttyp-RAM-Kassette (25) mit der Schrifttyp-RAM-Kassetteninformation sind, wobei jede Information wenigstens Schrifttyp, Zeichen, Anzahl der Zeichen umfaßt, die auf der Basis einer zuvor festgelegten Regel codiert sind.

## Revendications

1. Imprimante comprenant une pluralité de cartouches de mémoire de polices de caractères (24, 45) ayant des mémoires de polices de caractères (41, 42; 51-a, 51-b) de types différents, les mémoires de polices de caractères (41, 42 ; 51-a, 51-b) stockant en leur sein des données de polices de caractères de chargement au fil de l'eau qui ne se trouvent pas dans les mémoires de polices de caractères (7, 10) incorporées dans l'imprimante mais sont fournies par une unité principale (4) située à l'extérieur de l'imprimante, au moins un connecteur (23-a, 23-b) étant connecté à l'une quelconque parmi la pluralité de cartouches de mémoire de polices de caractères (24, 25), pour sortir les données de polices de caractères de chargement au fil de l'eau ladite imprimante comprenant en outre :
(a) un premier moyen pour lire de façon forcée les données de polices de caractères des caractères stockés dans la mémoire de polices de caractères (41, 42, 51-a ou 51-b), monté sur la cartouche de mémoire de polices de caractères (24 ou 25) connectée à l'un des connecteurs (23-a, 23-b) ; et (b) un second moyen pour discriminer des types de mémoire de polices de caractères montée sur la cartouche de mémoire de polices de caractères (24 ou 25) connectée audit connecteur et le contenu des données de polices de caractères des caractères stockés dans la mémoire de polices de caractères (41, 42, 51-a ou 51-b), montée sur la cartouche de mémoire de polices de caractères (24 ou 25), d'après les données de polices de caractères des caractères lus par le premier moyen.

2. Imprimante selon la revendication 1, caractérisée en ce que les cartouches de mémoire (24, 25) sont une cartouche ROM de polices de caractères (24) ayant l'information de ROM de polices de caractères et une cartouche RAM de polices de caractères (25) ayant l'information de cartouche RAM de polices de caractères, chaque information comprenant au moins un type de polices de caractères, des caractères, un nombre de caractères qui sont codés sur la base d'une règle prédéterminée.
